(19) Europäisches Patentamt / European Patent Office / Office européen des brevets

(11) **EP 3 329 319 B1**

(12) **FASCICULE DE BREVET EUROPEEN**

(45) Date de publication et mention de la délivrance du brevet:
**19.01.2022 Bulletin 2022/03**

(21) Numéro de dépôt: **16754203.4**

(22) Date de dépôt: **27.07.2016**

(51) Classification Internationale des Brevets (IPC):
**G02B 27/01** $^{(2006.01)}$   **G02F 1/13357** $^{(2006.01)}$

(52) Classification Coopérative des Brevets (CPC):
**G02F 1/133602; G02B 27/0101;** G02B 2027/0118;
G02B 2027/0127; G02B 2027/0161;
G02F 1/133603; G02F 1/133607

(86) Numéro de dépôt international:
**PCT/EP2016/067960**

(87) Numéro de publication internationale:
**WO 2017/017160 (02.02.2017 Gazette 2017/05)**

(54) **SYSTÈME DE PROJECTION D'UN AFFICHEUR TÊTE HAUTE**

PROJEKTIONSSYSTEM EINER KOPF-HOCH-ANZEIGEVORRICHTUNG

PROJECTION SYSTEM OF A HEAD-UP DISPLAY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.07.2015 FR 1557151**

(43) Date de publication de la demande:
**06.06.2018 Bulletin 2018/23**

(73) Titulaire: **Valeo Comfort and Driving Assistance 94046 Créteil Cedex (FR)**

(72) Inventeur: **IRZYK, Michael 94046 Créteil Cedex (FR)**

(74) Mandataire: **Delplanque, Arnaud Valeo Comfort and Driving Assistance 6 rue Daniel Costantini 94000 Créteil (FR)**

(56) Documents cités:
**US-A1- 2014 022 645    US-A1- 2014 063 359 US-A1- 2015 049 015**

EP 3 329 319 B1

## Description

### 1. Domaine technique de l'invention

L'invention concerne les systèmes de projection, notamment pour afficheurs tête haute. En particulier, l'invention concerne un système de projection d'une image virtuelle et un afficheur tête haute destinés à un véhicule automobile.

### 2. Arrière-plan technologique

Un afficheur tête haute permet la formation d'une image virtuelle grâce à une optique de projection. L'image virtuelle est formée par un système de projection, qui comprend notamment un écran qui forme sur sa surface une image réelle qui est projetée de sorte à former l'image virtuelle visible par l'utilisateur de l'afficheur, se superposant à l'environnement, par exemple la route dans le cas d'une utilisation automobile.

Dans le cadre de l'utilisation de l'afficheur comme afficheur tête haute dans un véhicule automobile, le conducteur du véhicule, à qui se destinent les informations apparaissant sur l'afficheur tête haute, a une position quasi fixe quand il se trouve sur le siège conducteur pendant la conduite du véhicule. Ainsi, l'image virtuelle est visible uniquement dans une zone appelée boîte à œil, qui représente la zone dans laquelle les yeux du conducteur peuvent se trouver en conditions normales de conduite.

Pour optimiser les performances énergétiques du système de projection, l'écran émet la lumière avec une forte directivité, afin que l'essentiel de la puissance lumineuse soit émise de façon à être dirigée vers la boîte à œil.

Les afficheurs existants sont généralement équipés de systèmes de projection émettant de la lumière permettant l'éclairage au minimum de la boite à œil, mais ces systèmes de projection émettent aussi de la lumière dans une zone autour et en dehors de la boîte à œil. Ainsi, la lumière émise en dehors de la boîte à œil n'est pas perçue par le conducteur et la puissance lumineuse dans cette zone est perdue, ce qui diminue le rendement optique du système de projection.

L'état de la technique antérieur pertinent comprend les documents suivants.

Le document US 2014/022645 A1 divulgue un affichage tête haute pour un véhicule dans lequel un rétro-éclairage éclaire un panneau LCD, dont l'image réelle est réfléchie par un pare-brise semiréfléchissant vers une boîte à œil du conducteur. Le système de lentilles du rétro-éclairage est conçu de manière à ce que les cônes de lumière émis par chaque pixel soient efficacement dirigés vers la boîte à œil .

Le document US 2014/063359 divulgue un affichage tête haute à cristaux liquides pour un véhicule. L'affichage utilise deux systèmes de lentilles pour s'assurer que les cônes de lumière émis par les pixels sont dirigés exactement vers la boîte à œil du conducteur.

Finalement, le document US 2015/049015 A1 divulgue un affichage tête haute pour un véhicule équipé d'un système de projection ayant écran et rétro-éclairage et d'un élément semi-réfléchissant.

### 3. Objectifs de l'invention

L'invention vise à pallier au moins certains des inconvénients des systèmes de projection connus.

En particulier, l'invention vise aussi à fournir, dans au moins un mode de réalisation de l'invention, un système de projection permettant un meilleur éclairage de la boite à œil.

L'invention vise aussi à fournir, dans au moins un mode de réalisation, un système de projection dont le rendement optique est amélioré.

L'invention vise aussi à fournir, dans au moins un mode de réalisation de l'invention, un système de projection permettant la réduction de la consommation énergétique.

L'invention vise aussi à fournir, dans au moins un mode de réalisation, un système de projection permettant la réduction de lumière parasite.

L'invention vise aussi à fournir, dans au moins un mode de réalisation, un système de projection permettant l'augmentation du contraste de l'éclairage.

### 4. Exposé de l'invention

Pour ce faire, l'invention concerne un système de projection pour afficheur, notamment afficheur tête haute, selon la revendication 1. Autres modes de réalisation de l'invention sont définis dans les revendications dépendantes.

Un système de projection selon l'invention permet donc d'adapter la direction des indicatrices des cônes d'éclairement en fonction de la distance de ces cônes avec le cône dont le sommet est le centre de l'écran.

Pour éclairer la boîte à œil, quelques systèmes de projection de l'art antérieur ont des cônes d'éclairement dont toutes les indicatrices ont la même direction, généralement orthogonale à l'écran. L'invention permet donc d'obtenir des indicatrices orientées dans plusieurs directions différentes, ce qui permet un éclairage plus précis et optimisé de la boîte à œil.

Avantageusement et selon l'invention, la direction de l'indicatrice de chaque cône est orientée par rapport à une direction perpendiculaire à l'écran, selon un angle $\theta$ horizontal défini par $\theta = \theta_0 + f_h(x-x_0)$ et un angle $\psi$ vertical défini par $\psi = \psi_0 + f_v(y-y_0)$ avec $f_h$ une fonction d'orientation horizontale, $f_v$ une fonction d'orientation verticale, $\theta_0$ l'angle horizontal de la direction de l'indicatrice du cône dont le sommet est le centre de l'écran, $\psi_0$ l'angle vertical de la direction de l'indicatrice du cône dont le sommet est le centre de l'écran, x la coordonnée du sommet de l'indicatrice sur un axe horizontal, $x_0$ la coordonnée du centre de l'écran sur un axe horizontal, y la coordonnée du centre de l'écran sur un axe horizontal, y la coordonnée du sommet de l'indicatrice sur un axe vertical et $y_0$ la coordonnée du centre de l'écran sur un axe vertical. Dans ce système de coordonnées, l'axe dit *horizontal* (x) et l'axe dit *vertical* (y) se trouvent dans le plan de l'écran 14.

Selon cet aspect de l'invention, l'orientation de la direction des indicatrices se fait par combinaison de décalages angulaires de la direction de l'indicatrice de chaque cône par rapport à la direction de l'indicatrice dont le cône a comme sommet le centre de l'écran. La fonction d'orientation horizontale et la fonction d'orientation verticale sont des fonctions telles que l'angle de chaque indicatrice de sommet quelconque augmente avec l'augmentation de la distance dudit sommet quelconque avec le centre de l'écran.

Avantageusement et selon ce dernier aspect de l'invention, la fonction d'orientation horizontale est une fonction nulle et la fonction d'orientation verticale est une fonction linéaire non nulle.

Autrement dit, $\theta = \theta_0$ et $\psi = \psi_0 + a_v*(y-y_0)$ avec $a_v$ un réel non nul.

Avantageusement et selon une variante de ce dernier aspect de l'invention, la fonction d'orientation verticale est une fonction nulle et la fonction d'orientation horizontale est une fonction linéaire non nulle.

Autrement dit, $\psi = \psi_0$ et $\theta = \theta_0 + a_h*(x-x_0)$ avec $a_h$ un réel non nul.

Selon ces aspects de l'invention, la modification de la direction en fonction de l'éloignement des sommets des cônes avec le centre de l'écran s'effectue seulement selon un axe, soit vertical soit horizontal, et ce de façon linéaire.

Avantageusement et selon une variante de ce dernier aspect de l'invention, la fonction d'orientation horizontale et la fonction d'orientation verticale sont des fonctions linéaires et non nulles.

Selon cet aspect de l'invention, la modification de la direction en fonction de l'éloignement des sommets des cônes avec le centre de l'écran s'effectue de façon linéaire selon les deux axes, horizontal et vertical.

Avantageusement et selon l'invention, la fonction d'orientation horizontale et la fonction d'orientation verticale sont des fonctions quadratiques et non nulles.

Avantageusement et selon l'invention, la fonction d'orientation horizontale et la fonction d'orientation verticale sont des fonctions biquadratiques et non nulles.

Avantageusement et selon l'invention, les cônes d'éclairement ont un angle au sommet dont la valeur dépend de la distance de chaque sommet de cône avec le centre de l'écran.

Selon cet aspect de l'invention, le procédé permet d'ajuster la taille des cônes d'éclairement par modification de l'angle au sommet de chaque cône.

Avantageusement, plus le sommet du cône est éloigné du centre de l'écran, plus la valeur de l'angle au sommet diminue. La réduction des angles au sommet des cônes et donc de la taille des cônes permet d'améliorer le rendement optique du dispositif, en concentrant les rayons lumineux dans une zone plus étroite délimitée par le cône. Cette amélioration du rendement optique est d'autant plus importante dans les zones périphériques d'éclairement, où un cône d'angle au sommet trop élevé entraînerait un éclairage peu précis de l'élément optique semi-réfléchissant et donc de la boîte à œil, en particulier parce qu'une partie de la lumière se propage dans une zone extérieure à la boite à œil et est donc perdue, ce qui réduit le rendement optique. La réduction de l'angle au sommet de chaque cône, plus important dans les zones périphériques c'est-à-dire éloignées du centre de l'écran, permettent donc l'amélioration du rendement optique.

Avantageusement et selon l'invention, l'indicatrice partant du centre de l'écran a une direction orthogonale à l'écran.

En d'autres termes, $\theta_0 = \psi_0 = 0$.

Selon l'invention, le dispositif de rétro-éclairage comprenant une pluralité de sources lumineuses, les moyens d'orientation comprennent un support courbe des sources lumineuses de sorte à orienter la lumière provenant de chaque source lumineuse de sorte à ce que ladite lumière, incidente sur un point d'incidence de l'écran, soit de même direction que l'indicatrice du cône dont ledit point d'incidence est le sommet.

Selon l'invention, la modification du support des sources lumineuses permet d'orienter de façon précise la direction de l'éclairement des sources lumineuses en direction de l'écran, afin d'obtenir des directions d'indicatrices précises et éclairer au mieux la boite à œil.

L'invention concerne également un afficheur tête haute comprenant un système de projection d'image selon l'invention.

## 5. Liste des figures

D'autres buts, caractéristiques et avantages de l'invention apparaîtront à la lecture de la description suivante donnée à titre uniquement non limitatif et qui se réfère aux figures annexées dans lesquelles :

- la figure 1 est une vue schématique d'un système de projection selon un mode de réalisation de l'invention,
- la figure 2 est une vue schématique d'un écran d'un système de projection selon un mode de réalisation de l'invention,
- la figure 3 est une vue schématique d'indicatrices et de cônes d'éclairement d'un système de projection selon un mode de réalisation de l'invention,
- la figure 4a est une vue schématique de l'éclairement de la boite à œil par un élément optique semi-réfléchissant d'un système de projection selon l'art antérieur,
- la figure 4b est une vue schématique de l'éclairement de la boite à œil par un élément optique semi-réfléchissant d'un système de projection selon un mode de réalisation de l'invention,

- la figure 5a représente des moyens d'orientation et un système de projection qui ne sont pas selon l'invention,
- la figure 5b représente des moyens d'orientation et un système de projection selon l'invention.

## 6. Description détaillée d'un mode de réalisation de l'invention

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations, à condition que ces modes tombent à l'intérieur de la portée des revendications ci-jointes.

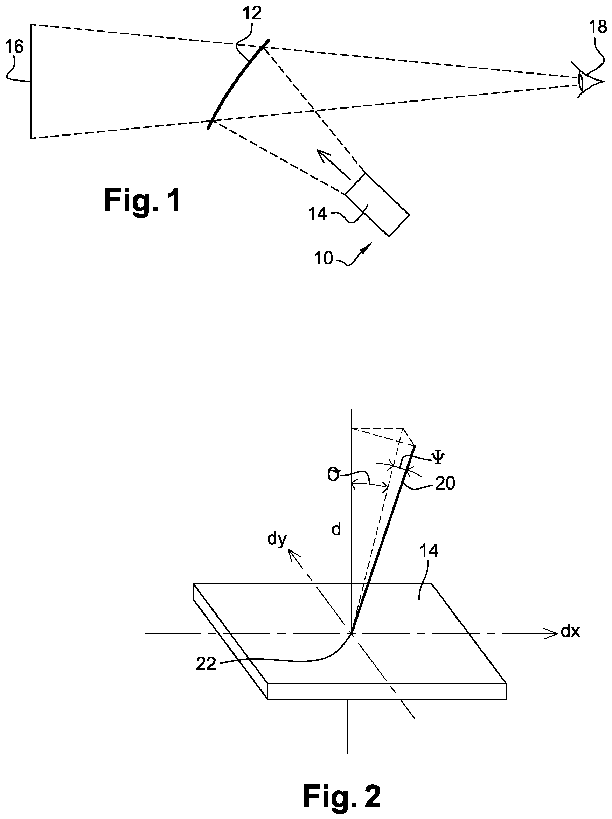

La figure 1 représente un système 10 de projection et un élément optique semi-réfléchissant 12, selon un mode de réalisation de l'invention. Le système 10 de projection comprend un écran 14, par exemple un écran à cristaux liquides (ou écran LCD pour *Liquid Crystal Display* en anglais), permettant l'émission de lumière en direction de l'élément optique semi-réfléchissant 12. Plus précisément, la lumière émise par l'écran 14 sur l'élément optique semi-réfléchissant 12 permet la formation d'une image 16 virtuelle dans le champ de vision d'un utilisateur de l'élément optique semi-réfléchissant 12, par exemple le conducteur d'un véhicule équipé de l'élément optique semi-réfléchissant 12. Pour permettre la formation de l'image virtuelle, l'écran 14 éclaire l'élément optique semi-réfléchissant 12 selon une pluralité de cônes d'éclairement dont les sommets sont des points situés sur l'écran, chaque cône d'éclairement étant notamment défini par son axe, appelé indicatrice du cône.

L'élément optique semi-réfléchissant 12 est une optique de projection susceptible de permettre la formation de l'image 16 virtuelle. Dans le cadre d'une utilisation dans un véhicule automobile, cette optique de projection est par exemple une lame semi-réfléchissante placée entre le conducteur et le pare-brise du véhicule, ou directement le pare-brise du véhicule.

Le conducteur 18 du véhicule est ici représenté par un des ses yeux. L'objectif de l'écran 14 est de permettre l'éclairage de l'élément optique semi-réfléchissant 12 et ainsi l'affichage de l'image 16 virtuelle de façon à ce qu'elle soit visible par le conducteur 18 dans une zone limitée correspondant aux deux yeux et ajustée pour tenir compte d'éventuels déplacements des yeux qui adviennent dans des conditions normales de conduite. Cette zone dans laquelle l'image 16 virtuelle doit être visible est appelée boite à œil.

L'objectif de l'invention est d'éclairer au mieux cette boite à œil, pour que l'image 16 virtuelle soit bien visible au conducteur 18 et pour éviter les pertes de rendement optique dues à un éclairage d'une zone trop large dépassant la boite à œil. Le rendement optique est le rapport entre la puissance lumineuse de l'éclairage reçue sur la puissance lumineuse de l'éclairage émise.

La figure 2 représente une partie d'un écran 14 d'un système de projection selon un mode de réalisation de l'invention, ainsi qu'une indicatrice 20 d'un cône d'éclairement qui part d'un sommet 22 situé sur l'écran 14 et est dirigée vers l'élément optique semi-réfléchissant 12 sur la figure 1, non représenté sur cette figure.

Une droite d perpendiculaire à l'écran 14 et passant par le sommet 22 représente une indicatrice classique d'un système de projection selon l'art antérieur. Un système selon un mode de réalisation de l'invention permet l'orientation d'une indicatrice 20 selon une direction différente de l'indicatrice classique, l'orientation de l'indicatrice par rapport à cette droite d étant représentée par la combinaison de deux angles, un angle $\theta$ dit horizontal, qui représente l'orientation de l'indicatrice 20 par rapport à la droite d selon une première direction dx d'un repère orthonormé, direction dite par la suite direction horizontale et un angle $\psi$ dit vertical qui représente l'orientation de l'indicatrice 20 par rapport à la droite d selon une seconde direction dy dudit repère orthonormé, direction dite par la suite direction verticale. La valeur de chaque angle $\theta$, $\psi$ est calculée selon l'invention en fonction de l'éloignement du sommet 22 du cône avec le point situé au centre de l'écran 14 (non représenté sur cette figure). L'angle $\theta$ horizontal est défini par la formule $\theta = \theta_0 + f_h(x-x_0)$, avec $f_h$ une fonction d'orientation horizontale, $\theta_0$ l'angle horizontal de la direction de l'indicatrice du cône dont le sommet est le centre de l'écran 14, x la coordonnée du sommet 22 de l'indicatrice 20 sur un axe horizontal et $x_0$ la coordonnée du centre de l'écran 14 sur un axe horizontal. L'angle $\psi$ vertical est défini par la formule $\psi = \psi_0 + f_v(y-y_0)$, avec $f_v$ une fonction d'orientation verticale, $\psi_0$ l'angle vertical de la direction de l'indicatrice du cône dont le sommet est le centre de l'écran, y la coordonnée du sommet 22 de l'indicatrice 20 sur un axe vertical, et $y_0$ la coordonnée du centre de l'écran 14 sur un axe vertical.

La fonction $f_h$ d'orientation horizontale et la fonction $f_v$ d'orientation verticale sont déterminées en fonction de différents paramètres, par exemple la position de la boite à œil et la dimension de la boite à œil, la position de l'élément semi-réfléchissant, la courbure de l'élément semi-réfléchissant, la distance entre l'élément réfléchissant et l'écran, etc.

Elles peuvent être des fonctions de différent types, par exemple :

- la fonction $f_h$ d'orientation horizontale est linéaire non nulle et la fonction $f_v$ d'orientation verticale est nulle,
- la fonction $f_v$ d'orientation verticale est linéaire non nulle et la fonction $f_h$ d'orientation horizontale est nulle,
- la fonction $f_h$ d'orientation horizontale et la fonction $f_v$ d'orientation verticale sont des fonctions linéaires et non nulles,

- la fonction $f_h$ d'orientation horizontale et la fonction $f_v$ d'orientation verticale sont des fonctions quadratiques et non nulles,
- la fonction $f_h$ d'orientation horizontale et la fonction $f_v$ d'orientation verticale sont des fonctions biquadratiques et non nulles.

Les deux premiers exemples sont chacun une variation linéaire sur un seul axe (horizontal ou vertical). Le troisième exemple est une variation bilinéaire, sur deux axes.

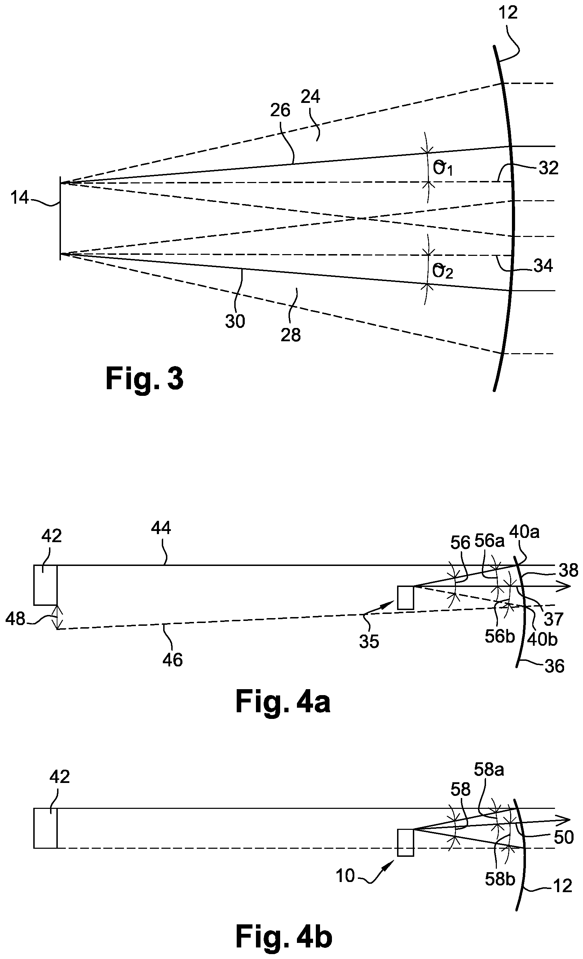

Les modes de réalisations décrits par la suite utilisent une variation bilinéaire, qui est celle qui donne les meilleurs résultats, en permettant une variation progressive et linéaire de l'orientation de chaque indicatrice en fonction de sa distance avec le centre de l'écran 14. Pour des raisons de clarté, les figures 3, 4a, 4b, 5 et 6 représentent le système de projection uniquement selon l'axe horizontal, et l'orientation des indicatrices est visible selon l'angle θ horizontal. Toutes les caractéristiques décrites en références aux figures 3, 4a, 4b, 5 et 6 s'appliquent aussi à l'orientation des indicatrices selon l'angle ψ vertical.

La figure 3 représente schématiquement des cônes d'éclairement d'un système de projection selon un mode de réalisation de l'invention.

Seul l'écran 14 du système de projection est représenté, ledit écran 14 permettant l'éclairage de l'élément optique semi-réfléchissant 12. L'écran 14 émet de la lumière vers l'élément optique semi-réfléchissant 12 selon des cônes d'éclairement, dont deux sont représentés sur cette figure : un premier cône 24 d'éclairement a comme axe une première indicatrice 26 et un deuxième cône 28 d'éclairement a comme axe une deuxième indicatrice 30. La première indicatrice 26 est orientée selon un angle $\theta_1$ horizontal et la deuxième indicatrice 30 est orientée selon un angle $\theta_2$ horizontal par rapport à une direction perpendiculaire à l'écran représentée par les droites 32, 34 perpendiculaires à l'écran. Comme expliqué précédemment, l'orientation selon l'angle vertical n'est pas représentée sur cette figure. Les cônes 24, 28 d'éclairement sont orientés de la même façon que les indicatrices 26, 30, et sont ainsi décalés par rapport à un cône d'éclairement selon l'art antérieur dont les indicatrices sont de direction perpendiculaire à l'écran.

Les figures 4a et 4b montrent les effets de cette orientation sur l'éclairage d'une boite à œil et sur le rendement optique du système de projection.

La figure 4a représente l'éclairement d'une boite à œil par un système 35 de projection selon l'art antérieur, par le biais d'un élément optique semi-réfléchissant 36. Une indicatrice 37 d'un cône d'éclairement est représentée, et est perpendiculaire à l'écran du système de projection 35. Le cône d'éclairement permet l'éclairement d'une zone 38 de l'élément optique semi-réfléchissant délimitée par les points référencés 40a et 40b. Un conducteur d'un véhicule équipé du système de projection et de l'élément optique semi-réfléchissant peut voir l'image virtuelle affichée par l'élément optique semi-réfléchissant depuis la boite à œil 42, c'est-à-dire une zone dans laquelle les yeux du conducteur sont susceptibles de se situer, dans le cadre d'une situation normale de conduite. L'image virtuelle est visible dans une zone délimitée par deux droites, une droite 44 d'affichage supérieure et une droite 46 d'affichage inférieure. La droite 44 d'affichage supérieure indique que l'éclairement atteint exactement la partie supérieure de la boite à œil 42, et la droite 46 d'affichage inférieure indique que l'éclairement atteint la partie inférieure de la boite à œil 42 ainsi qu'un intervalle 48 supplémentaire extérieur à la boite à œil 42.

La figure 4b représente l'éclairement de la boite à œil 42 par un système 10 de projection selon un mode de réalisation de l'invention, par le biais d'un élément optique semi-réfléchissant 12. Contrairement au système 35 de projection selon l'art antérieur décrit en référence à la figure 4a, l'indicatrice 50 représentée est orientée par rapport à une direction perpendiculaire à l'écran 14 du système de projection selon un angle horizontal non nul. L'image virtuelle formée par l'élément optique semi-réfléchissant est visible dans une zone délimitée par deux droites, une droite 52 de réflexion supérieure et une droite 54 de réflexion inférieure. La droite 52 de réflexion supérieure indique que l'éclairement atteint exactement la partie supérieure de la boite à œil 42, et la droite 54 de réflexion inférieure indique que l'éclairement atteint exactement la partie inférieure de la boite à œil 42. Contrairement au système 35 de projection selon l'art antérieur représenté figure 4a, le système 10 de projection selon ce mode de réalisation permet un éclairage plus adapté de la boite à œil 42, en éclairant seulement la boite à œil 42 sans pertes d'éclairage, améliorant ainsi le rendement optique, et ce grâce au réglage de l'orientation des indicatrices et de l'angle d'ouverture des cônes d'éclairement provenant de l'écran. Éclairer uniquement la boite à œil 42 permet en outre la réduction de la lumière parasite et l'augmentation du contraste effectif de l'image virtuelle affichée sur l'élément optique semi-réfléchissant 12.

En outre l'amélioration du rendement optique se fait aussi grâce à la réduction de l'angle au sommet du cône. Sur la figure 4a, l'angle 56 au sommet est divisé en deux angles 56a et 56b entre l'indicatrice et le cône, appelés demi-angles au sommet, de valeurs égales puisque l'indicatrice est l'axe du cône. De la même façon, sur la figure 4b, l'angle 58 au sommet est divisé en deux demi-angles au sommet 58a et 58b. L'angle 58 au sommet du cône nécessaire pour couvrir l'intégralité de la boite à œil 42 et rendu possible par le système 10 de projection selon un mode de réalisation de l'invention, est inférieur à l'angle 56 au sommet du cône obtenu par le système 35 de projection selon l'art antérieur. Ainsi, le cône obtenu par le système 10 de projection selon un mode de réalisation de l'invention est plus étroit et donc permet une réduction de la puissance lumineuse à émettre pour obtenir une même puissance lumineuse reçue dans la boite à œil 42. Avantageusement, l'orientation des indicatrices est variable en fonction de la position du sommet des cônes et l'angle d'ouverture du cône d'éclairement est constant de préférence.

En pratique, si la valeur des demi-angles 56a, 56b au sommet du cône obtenus par le système de projection selon l'art antérieur est égale à 20° et si la valeur des demi-angles 58a, 58b au sommet du cône obtenus par le système de projection selon un mode de réalisation de l'invention est égale à 15°, l'amélioration du rendement optique est égal à :

$$\frac{4\pi(1-\cos 20°)}{4\pi(1-\cos 15°)} \simeq \left(\frac{20°}{15°}\right)^2 \simeq 1.77$$

En général, la différence d'angle entre le demi-angle 56a, par exemple, dans le système 35 selon l'art antérieur et le demi-angle 58a correspondant dans le système 10 selon l'invention est égale à l'angle selon lequel est orienté l'indicatrice 50 du système 10 par rapport à la direction perpendiculaire à l'écran, c'est-à-dire la différence angulaire entre les deux indicatrices. Dans le cas présenté ci-dessus, l'indicatrice est orientée de 20-15=5° par rapport à la direction perpendiculaire à l'écran. Pour une orientation de 3°, l'amélioration du rendement optique selon la formule précédente est de 1,44, soit 40% de puissance lumineuse perçue supplémentaire dans la boite à œil 42.

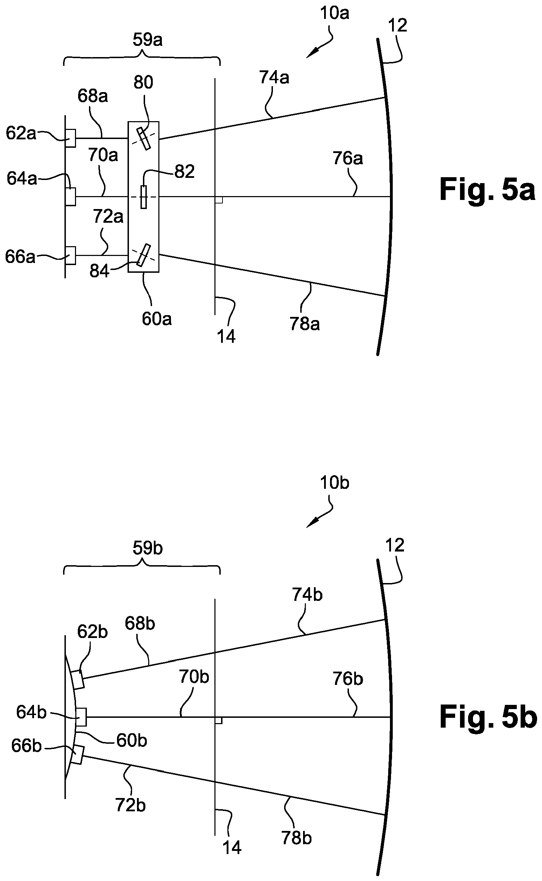

Pour permettre l'orientation des indicatrices de chaque cône d'éclairement de l'écran, une méthode est de modifier l'orientation de la lumière provenant d'une ou de plusieurs sources lumineuses d'un dispositif de rétro-éclairage de l'écran 14 du système 10 de projection. Ainsi, la façon dont la lumière sort de l'écran 14 pour éclairer l'élément optique semi-réfléchissant 12 est déterminée par la façon dont la lumière provenant du dispositif de rétro-éclairage entre dans l'écran 14. Des moyens d'orientation des indicatrices permettent cette orientation dans le dispositif de rétro-éclairage, et ceux-ci peuvent prendre plusieurs formes, comme représentées aux figures 5a et 5b.

La figure 5a représente un système 10a de projection qui n'est pas selon l'invention, comprenant un dispositif 59a de rétro-éclairage comprenant des moyens d'orientation composés d'un système 60a optique placé entre au moins une source lumineuse, ici trois sources lumineuses 62a, 64a, 66a, et l'écran 14. Les sources 62a, 64a, 66a émettent chacune de la lumière, représentée ici par un faisceau 68a, 70a, 72a lumineux unique pour chaque source, pour plus de clarté. À la sortie des sources lumineuses, les faisceaux 68a, 70a, 72a sont dirigés vers l'écran 14 selon une direction perpendiculaire à l'écran. Le système 60a optique constituant les moyens d'orientation permet l'orientation des faisceaux 68a, 70a, 72a lumineux incidents sur l'écran 14, permettant ainsi l'orientation des indicatrices 74a, 76a, 78a des cônes d'éclairement émis par l'écran 14 en direction de l'élément optique semi-réfléchissant 12. L'indicatrice 76a au centre de l'écran 14 est ici perpendiculaire à l'écran, c'est-à-dire que $\theta_0 = \psi_0 = 0$.

Le système 60a optique est par exemple composé d'une lentille 80, 82, 84 par source 62a, 64a, 66a dont l'axe est décalé de façon à orienter les faisceaux 68a, 70a, 72a selon l'orientation souhaitée de façon à obtenir les indicatrices 74a, 76a, 78a souhaitées.

La figure 5b représente un système 10b de projection selon l'invention comprenant un dispositif 59b de rétro-éclairage comprenant des moyens d'orientation composés d'un support 60b des sources lumineuses ici trois sources lumineuses 62b, 64b, 66b, adapté pour orienter l'éclairage de chaque source 62b, 64b, 66b de sorte à ce que la lumière incidente sur un point d'incidence de l'écran 14 soit dans la direction de l'indicatrice souhaitée pour le cône dont ledit point d'incidence est le sommet. En l'occurrence, le support 60b est courbe et les sources 62b, 64b, 66b sont placées sur ce support courbe de façon à ce que les faisceaux 68b, 70b, 72b lumineux émis par les sources 62b, 64b, 66b soient dirigés selon l'angle souhaité pour les indicatrices 74b, 76b, 78b des cônes d'éclairement émis depuis l'écran 14. Selon les modes de réalisations, le support 60b peut être par exemple sphérique, permettant une orientation des indicatrices dans toutes les directions, ou cylindrique, permettant une orientation des indicatrices dans un nombre de directions limité, mais plus simple à réaliser.

L'invention ne se limite pas aux seuls modes de réalisation décrits. En particulier, les moyens d'orientation selon l'invention peut être combiné avec le système 60a optique de la figure 5a, de sorte à ce que la lumière soit émise par une pluralité de sources placées sur le support (60b) courbe permettant l'orientation de tout ou partie de la lumière émise, la lumière émise traversant ensuite le système (60a) optique permettant à nouveau l'orientation de tout ou partie de la lumière émise, de sorte à ce que la lumière incidente sur un point d'incidence de l'écran soit dans la direction souhaitée pour l'indicatrice du cône dont ledit point d'incidence est le sommet.

De plus, le système de projection peut utiliser différents types de technologies d'écran et de rétro-éclairage, comme par exemple les systèmes de type transistor en couches minces (en anglais *Thin Film Transistor* ou TFT), matrice de micro-miroirs DLP (pour *Digital Light Processing* en anglais), balayage laser, micro-miroir LCOS (pour *Liquid Crystal on Silicon* en anglais), etc. Selon les technologies utilisées, les moyens d'orientation sont soit un ou plusieurs systèmes optiques, soit un support adapté, soit une combinaison des deux.

## Revendications

1.    Système de projection pour afficheur, notamment afficheur tête haute destiné à un véhicule automobile, d'une image virtuelle visible uniquement dans une zone appelée boîte à œil (42) comprenant :

- un élément optique semi-réfléchissant (12),
- un dispositif (59b) de rétro-éclairage,
- un écran (14), adapté pour être éclairé par ledit dispositif ( 59b) de rétro-éclairage et adapté pour éclairer l'élément optique semi-réfléchissant (12) selon des cônes (24, 28) d'éclairement, chaque cône (24, 28) d'éclairement ayant un axe, dit indicatrice (20, 26, 30, 50), partant d'un point (22), dit sommet du cône, situé sur l'écran (14) et dirigé vers l'élément optique semi-réfléchissant (12), ledit système de projection comprenant des moyens (60b) d'orientation des directions des indicatrices (20, 26, 30, 50) des cônes (24, 28), lesdits moyens d'orientation étant adaptés pour orienter les indicatrices (20, 26, 30, 50) selon une direction calculée par une fonction d'orientation dépendant de la distance de chaque sommet (22) de cône avec le centre de l'écran (14), le dispositif (59b) de rétro-éclairage comprenant des sources (62b, 64b, 66b) llumineuses ledit système de projection étant **caractérisé en ce que** les moyens d'orientation comprennent un support (60b) des sources (62b, 64b, 66b) lumineuses adapté pour orienter la lumière provenant de chaque source lumineuse de sorte à ce que ladite lumière, incidente sur un point d'incidence de l'écran (14), soit dans la direction de l'indicatrice du cône dont ledit point d'incidence est le sommet de sorte à éclairer la boîte à œil (42) sans pertes d'éclairage.

2. Système de projection selon la revendication 1, dans lequel la direction de l'indicatrice de chaque cône (24, 28) est orientée par rapport à une direction perpendiculaire à l'écran (14), selon un angle θ dit horizontal défini par $\theta = \theta_0 + f_h(x-x_0)$ et un angle ψ dit vertical défini par $\psi = \psi_0 + f_v(y-y_0)$ avec $f_h$ une fonction d'orientation horizontale, $f_v$ une fonction d'orientation verticale, $\theta_0$ l'angle horizontal de la direction de l'indicatrice du cône dont le sommet est le centre de l'écran (14), $\psi_0$ l'angle vertical de la direction de l'indicatrice du cône dont le sommet est le centre de l'écran (14), x la coordonnée du sommet (22) de l'indicatrice sur un premier axe qui est dit horizontal, $x_0$ la coordonnée du centre de l'écran (14) sur le premier axe, y la coordonnée du sommet (22) de l'indicatrice sur un second axe qui est dit vertical, et $y_0$ la coordonnée du centre de l'écran (14)sur le second axe, le premier axe et le second axe se trouvant dans le plan de l'écran (14).

3. Système de projection selon la revendication 2, dans lequel la fonction d'orientation horizontale est une fonction nulle et la fonction d'orientation verticale est une fonction linéaire non nulle.

4. Système de projection selon la revendication 2, dans lequel la fonction d'orientation verticale est une fonction nulle et la fonction d'orientation horizontale est une fonction linéaire non nulle.

5. Système de projection selon la revendication 2, dans lequel la fonction d'orientation horizontale et la fonction d'orientation verticale sont des fonctions linéaires et non nulles.

6. Système de projection selon la revendication 2, dans lequel l'une au moins des fonctions d'orientation horizontale et fonction d'orientation verticale est une fonction quadratique non nulle.

7. Système de projection selon la revendication 2, dans lequel l'une au moins des fonctions d'orientation horizontale et fonction d'orientation verticale est une fonction biquadratique non nulle.

8. Système de projection selon l'une des revendications 1 à 7, dans lequel les cônes (24, 28) d'éclairement ont un angle (58) au sommet dont la valeur est fonction de la distance de chaque sommet (22) de cône avec le centre de l'écran (14).

9. Système de projection selon la revendication 8, dans lequel plus le sommet du cône est éloigné du centre de l'écran, plus la valeur de l'angle au sommet diminue.

10. Système de projection selon l'une des revendications 1 à 9, dans lequel l'indicatrice partant du centre de l'écran (14) a une direction orthogonale à l'écran (14).

11. Afficheur tête haute qui comprend un système de projection d'image selon l'une des revendications 1 à 10.

**Patentansprüche**

1. Projektionssystem für eine Anzeigevorrichtung, insbesondere eine Kopf-hoch-Anzeigevorrichtung für ein Kraftfahrzeug, eines virtuellen Bildes, das nur in einem als Augenfeld (42) bezeichneten Bereich sichtbar ist, beinhaltend:

- ein halbreflektierendes optisches Element (12),
- eine Rückbeleuchtungsvorrichtung (59b),
- einen Bildschirm (14), der dazu angepasst ist, durch die Rückbeleuchtungsvorrichtung (59b) beleuchtet zu werden, und dazu angepasst ist, das halbreflektierende optische Element (12) gemäß Beleuchtungskegeln (24, 28) zu beleuchten, wobei jeder Beleuchtungskegel (24, 28) eine als Indikatrix (20, 26, 30, 50) bezeichnete Achse aufweist, die von einem Punkt (22), der als Kegelspitze bezeichnet wird und sich auf dem Bildschirm (14) befindet, ausgeht und zu dem halbreflektierenden optischen Element (12) gerichtet ist,
wobei das Projektionssystem Mittel (60b) zur Ausrichtung der Richtungen der Indikatrizen (20, 26, 30, 50) der Kegel (24, 28) beinhaltet, wobei die Ausrichtungsmittel dazu angepasst sind, die Indikatrizen (20, 26, 30, 50) gemäß einer Richtung auszurichten, die durch eine Ausrichtungsfunktion berechnet wird, die von dem Abstand jeder Kegelspitze (22) zu der Mitte des Bildschirms (14) abhängt,
wobei die Rückbeleuchtungsvorrichtung (59b) Lichtquellen (62b, 64b, 66b) beinhaltet,
wobei das Projektionssystem **dadurch gekennzeichnet ist, dass** die Ausrichtungsmittel einen Träger (60b) der Lichtquellen (62b, 64b, 66b) beinhalten, der dazu angepasst ist, das von jeder Lichtquelle ausgehende Licht so auszurichten, dass das Licht, das auf einen Einfallspunkt des Bildschirms (14) einfällt, der Richtung der Indikatrix des Kegels entspricht, von dem der Einfallspunkt die Spitze ist, um das Augenfeld (42) ohne Beleuchtungsverluste zu beleuchten.

2. Projektionssystem nach Anspruch 1, wobei die Richtung der Indikatrix jedes Kegels (24, 28) mit Bezug auf eine zu dem Bildschirm (14) senkrechte Richtung ausgerichtet ist, gemäß einem Winkel θ, der als Horizontalwinkel bezeichnet wird und durch $\theta = \theta_0 + f_h(x-x_0)$ definiert ist, und einem Winkel Ψ, der als Vertikalwinkel bezeichnet wird und durch $\Psi = \Psi_0 + f_v(y-y_0)$ definiert ist, wobei $f_h$ eine horizontale Ausrichtungsfunktion ist, $f_v$ eine vertikale Ausrichtungsfunktion ist, $\theta_0$ der Horizontalwinkel der Richtung der Indikatrix des Kegels ist, dessen Spitze die Mitte des Bildschirms (14) ist, $\Psi_0$ der Vertikalwinkel der Richtung der Indikatrix des Kegels ist, dessen Spitze die Mitte des Bildschirms (14) ist, x die Koordinate der Spitze (22) der Indikatrix auf einer ersten Achse ist, die als Horizontalachse bezeichnet wird, $x_0$ die Koordinate der Mitte des Bildschirms (14) auf der ersten Achse ist, y die Koordinate der Spitze (22) der Indikatrix auf einer zweiten Achse ist, die als Vertikalachse bezeichnet wird, $y_0$ die Koordinate der Mitte des Bildschirms (14) auf der zweiten Achse ist, wobei sich die erste Achse und die zweite Achse in der Ebene des Bildschirms (14) befinden.

3. Projektionssystem nach Anspruch 2, wobei die horizontale Ausrichtungsfunktion eine Nullfunktion ist und die vertikale Ausrichtungsfunktion eine von Null verschiedene lineare Funktion ist.

4. Projektionssystem nach Anspruch 2, wobei die vertikale Ausrichtungsfunktion eine Nullfunktion ist und die horizontale Ausrichtungsfunktion eine von Null verschiedene lineare Funktion ist.

5. Projektionssystem nach Anspruch 2, wobei die horizontale Ausrichtungsfunktion und die vertikale Ausrichtungsfunktion von Null verschiedene lineare Funktionen sind.

6. Projektionssystem nach Anspruch 2, wobei mindestens eine von der horizontalen Ausrichtungsfunktion und der vertikalen Ausrichtungsfunktion eine von Null verschiedene quadratische Funktion ist.

7. Projektionssystem nach Anspruch 2, wobei mindestens eine von der horizontalen Ausrichtungsfunktion und der vertikalen Ausrichtungsfunktion eine von Null verschiedene biquadratische Funktion ist.

8. Projektionssystem nach einem der Ansprüche 1 bis 7, wobei die Beleuchtungskegel (24, 28) an der Spitze einen Winkel (58) aufweisen, dessen Wert von dem Abstand jeder Kegelspitze (22) zu der Mitte des Bildschirms (14) abhängt.

9. Projektionssystem nach Anspruch 8, wobei je weiter die Spitze des Kegels von der Mitte des Bildschirms entfernt ist, desto mehr der Wert des Winkels an der Spitze abnimmt.

10. Projektionssystem nach einem der Ansprüche 1 bis 9, wobei die Indikatrix, die von der Mitte des Bildschirms (14) ausgeht, eine zu dem Bildschirm (14) orthogonale Richtung aufweist.

11. Kopf-hoch-Anzeigevorrichtung, die ein Bildprojektionssystem nach einem der Ansprüche 1 bis 10 beinhaltet.

**Claims**

1. Projecting system for a display, especially a head-up display intended for a motor vehicle, said system projecting a virtual image that is visible only in a region (42) called the eyebox, and comprising:

   - a semi-reflective optical element (12),
   - a back-lighting device (59b),
   - a screen (14) suitable for being backlit by said back-lighting device (59b) and suitable for illuminating the semi-reflective optical element (12) via illumination cones (24, 28), each illumination cone (24, 28) having an axis, called the indicator (20, 26, 30, 50), that starts at a point (22), called the apex of the cone, located on the screen (14) and that is directed toward the semi-reflective optical element (12),

said projecting system comprising means (60b) for orienting directions of the indicators (20, 26, 30, 50) of the cones (24, 28), said orienting means being suitable for orienting the indicators (20, 26, 30, 50) in a direction computed via an orientation function dependent on the distance of each cone apex (22) from the centre of the screen (14), the back-lighting device (59b) comprising light sources (62b, 64b, 66b),

said projecting system being **characterized in that** the orientating means comprise a holder (60b) of the light sources (62b, 64b, 66b) that is suitable for orienting the light originating from each light source so that said light, when incident on a point of incidence on the screen (14), is in the direction of the indicator of the cone the apex of which is said point of incidence, so as to illuminate the eyebox (42) without loss of illuminance.

2. Projecting system according to Claim 1, wherein the direction of the indicator of each cone (24, 28) is oriented, with respect to a direction perpendicular to the screen (14), at an angle $\theta$, called the horizontal angle, that is defined by $\theta = \theta_0 + f_h(x-x_0)$, and an angle, called the vertical angle $\psi$, that is defined by $\psi = \psi_0 + f_v(y - y_0)$, with $f_h$ a horizontal orientation function, $f_h$ a vertical orientation function, $\theta_0$ the horizontal angle of the direction of the indicator of the cone the apex of which is the centre of the screen (14), $\psi_0$ the vertical angle of the direction of the indicator of the cone the apex of which is the centre of the screen (14), $x$ the coordinate of the apex (22) of the indicator on a first axis that is called the horizontal axis, $x_0$ the coordinate of the centre of the screen (14) on the first axis, y the coordinate of the apex (22) of the indicator on a second axis that is called the vertical axis, and $y_0$ the coordinate of the centre of the screen (14) on the second axis, the first axis and the second axis being located in the plane of the screen (14).

3. Projecting system according to Claim 2, wherein the horizontal orientation function is a zero function and the vertical orientation function is a nonzero linear function.

4. Projecting system according to Claim 2, wherein the vertical orientation function is a zero function and the horizontal orientation function is a nonzero linear function.

5. Projecting system according to Claim 2, wherein the horizontal orientation function and the vertical orientation function are nonzero linear functions.

6. Projecting system according to Claim 2, wherein one at least of the horizontal orientation function and vertical orientation function is a nonzero quadratic function.

7. Projecting system according to Claim 2, wherein one at least of the horizontal orientation function and vertical orientation function is a nonzero biquadratic function.

8. Projecting system according to one of Claims 1 to 7, wherein the illumination cones (24, 28) have an apex angle (58) the value of which is dependent on the distance of each cone apex (22) from the centre of the screen (14) .

9. Projecting system according to Claim 8, wherein the further the apex of the cone from the centre of the screen, the more the value of the apex angle decreases.

10. Projecting system according to one of Claims 1 to 9, wherein the indicator starting at the centre of the screen (14) has a direction orthogonal to the screen (14) .

11. Head-of display that comprises an image-projecting system according to one of Claims 1 to 10.

**Fig. 1**

**Fig. 2**

**Fig. 3**

**Fig. 4a**

**Fig. 4b**

# Fig. 5a

# Fig. 5b

**EP 3 329 319 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 2014022645 A1
- US 2014063359 A
- US 2015049015 A1